# EUROPEAN PATENT APPLICATION

(11) **EP 3 585 058 A1**
(43) Date of publication of application: **25.12.2019**
(21) Application number: 18461567.2
(22) Date of filing: 19.06.2018
(51) Int. Cl.: H04N 19/88, H04N 21/234, H04N 21/2343, H04N 19/119, H04N 19/167, H04N 19/33, H04N 19/59, G06T 7/11

(54) **A VIDEO ENCODING METHOD AND SYSTEM**

(71) Applicant: Patents Factory Ltd. Sp. z o.o., 66-002 Zielona Gora (PL)
(72) Inventor: Paczkowski, Jacek, 66-002 Zielona Gora (PL); Ostrowski, Kacper, 66-002 Zielona Gora (PL); Blachowicz, Piotr, 66-002 Zielona Gora (PL)
(74) Representative: Kancelaria Eupatent.pl Sp. z.o.o

(57) **Abstract**

A method for encoding a video stream, comprising the steps of: receiving (201) a set of video frames, comprising a plurality of consecutive frames (10, 20) of the video stream; determining (202) a common fragment (12) of the frames within the set that contains a moving object (11); for each of the frames (10, 20) within the set, reading the content of the common fragment (12) and providing (204) a reduced size fragment (31) having a smaller size in at least one dimension; and generating an encoded complex frame (30), which comprises the content of the reduced size fragment (31) of the common fragment from at least two successive frames (10, 20) of the set.

## Description

### TECHNICAL FIELD

The present invention relates to a video encoding method and system.

### BACKGROUND

High resolution video streams, such as video streams according to HDTV, Extreme HDTV or Ultra HDTV standards, require considerable bandwidth to be transmitted and processing power to be displayed. Various encoding methods are known to reduce the bitrate of the transmitted stream.

One type of encoding relates to converting a high resolution stream to a video stream of a lower resolution. This can be done by simply downscaling each frame. Various algorithms are known for downscaling, which utilize the concept of averaging a number of adjacent pixels of the high resolution video frame to a single pixel in the low resolution video frame. Such methods represent a lossy compression. While they allow to limit the bandwidth over which the low resolution video stream can be transmitted, large amount of data contained in the high resolution video stream is lost. The converted low resolution video stream, when upscaled and displayed on a high resolution video display, will appear roughly the same as when displayed on a low resolution video display.

Another method is known from a European patent application EP2555521, which comprises defining a size of a region for dividing the high resolution video frames into equally-sized adjacent regions. The high resolution video frames are processed in sets, each set containing a number of frames equal to the number of pixels within the region. Within the set the first high resolution video frame of the set is converted to a first low resolution video frame by copying the first pixel of each region to the first low resolution video frame to a position defined by a split function dependent on the pixel position in the high resolution video frame and the size of the region, and the next high resolution video frame of the set is converted to a next low resolution video frame by copying the next pixel of each region to the next low resolution video frame to a position defined by the split function, until all high resolution video frames of the set are converted to low resolution video frames.

There exists a need to provide further improvements to encoding of high resolution video streams, in order to increase the video encoding rate while keeping a high quality of the encoded data.

### SUMMARY

There is disclosed herein a method for encoding a video stream, comprising the steps of: receiving a set of video frames, comprising a plurality of consecutive frames of the video stream; determining a common fragment of the frames within the set that contains a moving object; for each of the frames within the set, reading the content of the common fragment and providing a reduced size fragment having a smaller size in at least one dimension; and generating an encoded complex frame, which comprises the content of the reduced size fragment of the common fragment from at least two successive frames of the set.

The method may further comprise determining the content of the common fragment and in case the content is the same for a plurality of frames, including a single instance of the reduced size fragment in the complex frame.

The reduced size fragment for at least one of the frames within the set may have a different size than the reduced size fragment for at least one other of the frames within the set.

The reduced size fragment can be divided to blocks, which are scaled horizontally or vertically or uniformly depending on the block contents, in particular with a 16x1, 8x2, 4x4, 2x8 or 16x1 scaling factor.

The encoded complex frame may include the original-size static background common to the frames of the set.

The encoded complex frame may include the original-size quasi-static background formed as a combination of backgrounds of the frames of the set.

The pixels of the quasi-static background can be collected from different positions in the block of consecutive frames of the set, wherein the selection of positions in the block from consecutive frames is according to a predetermined pattern or a random pattern.

The reduced-size fragments can be positioned in an insertion area corresponding to the position of the common fragment within the complex frame.

The reduced-size fragments can be positioned in an insertion area remote to the common fragment within the complex frame.

There is also described herein a method for decoding a video stream encoded by the method as described herein, comprising the steps of: reading the complex frame; reading consecutive reduced size fragments from the complex frame; and for each read reduced size fragment, generating a new decoded frame that contains the background reconstructed from the quasi-static background and the reduced size fragment enlarged to the size corresponding to the common fragment.

There is also disclosed a computer program comprising program code means for performing all the steps of the computer-implemented method as described herein when said program is run on a computer, as well as a computer readable medium storing computer-executable instructions performing all the steps of the computer-implemented method as described herein when executed on a computer.

Further, there is disclosed an encoder device for encoding a video stream, the encoder device comprising a controller configured to encode the video stream by: receiving a set of video frames, comprising a plurality of consecutive frames of the video stream; determining a common fragment of the frames within the set that contains a moving object; for each of the frames within the set, reading the content of the common fragment and providing a reduced size fragment having a smaller size in at least one dimension; and generating an encoded complex frame, which comprises the content of the reduced size fragment of the common fragment from at least two successive frames of the set.

There is also disclosed a decoder device for decoding a video stream encoded by the method as described herein, the decoder device comprising a controller configured to decode the video stream by: reading the complex frame; reading consecutive reduced size fragments from the complex frame; and for each read reduced size fragment, generating a new decoded frame that contains the background reconstructed from the quasi-static background and the reduced size fragment enlarged to the size and position corresponding to the common fragment.

### BRIEF DESCRIPTION OF DRAWINGS

The object of the present invention is shown by means of example embodiments on a drawing, wherein:
Figs. 1A, 1B show schematically video stream frames with a moving object;
Figs. 1C, 1D, 1E 1F, 1G, 1H show schematically encoded complex frames;
Fig. 1I shows schematically a reconstructed frame;
Fig. 2 shows an encoding method;
Fig. 3 shows a decoding method;
Fig. 4 shows a structure of an encoder or decoder device.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

### DETAILED DESCRIPTION

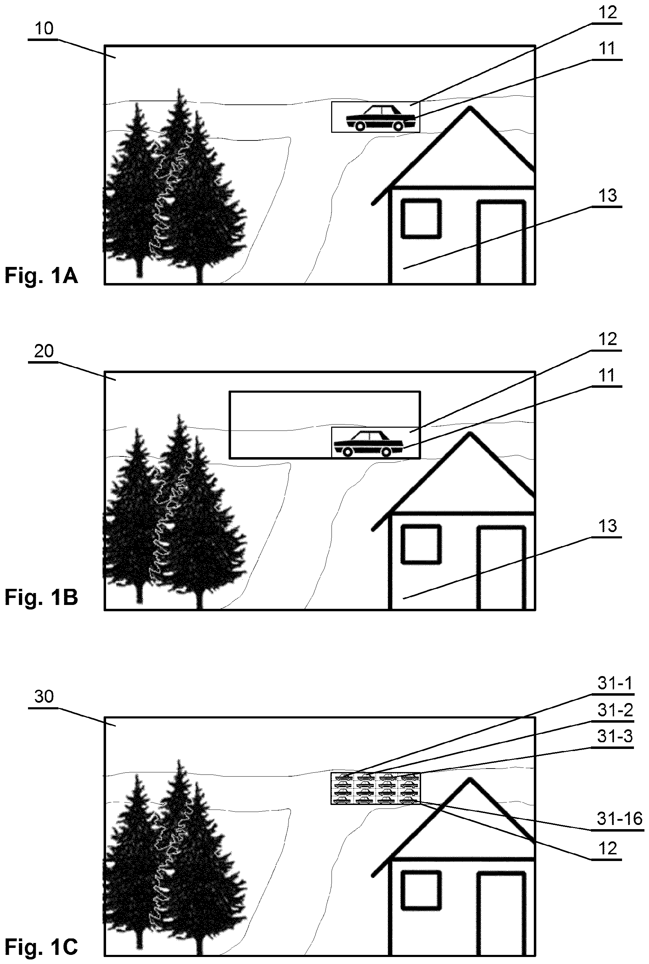

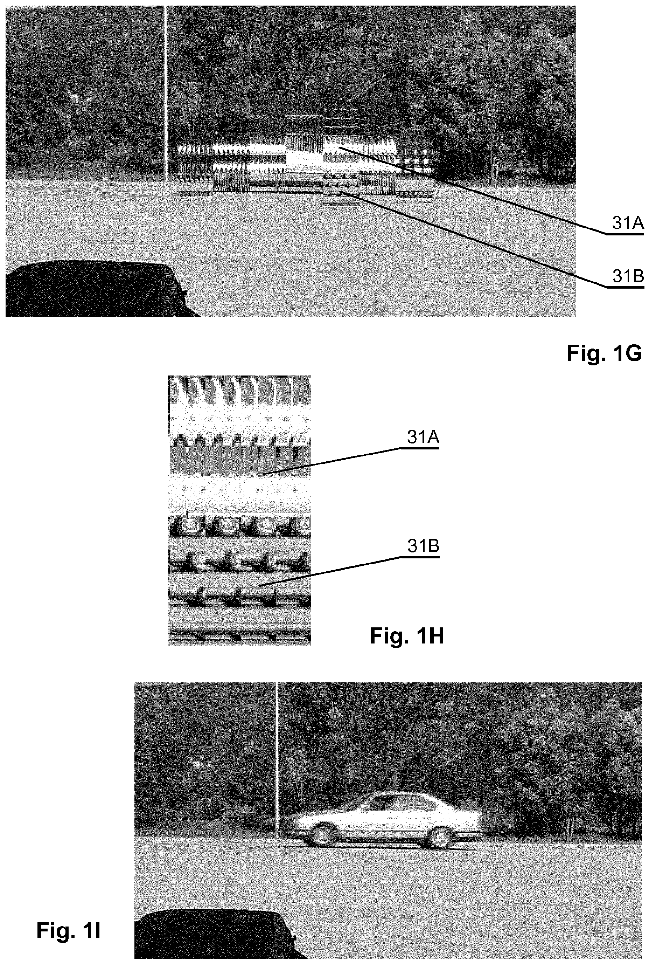

Figs. 1A, 1B show schematically video stream frames 10, 20 with a moving object 11. For example, this video frame can be captured by a high resolution surveillance camera, which is typically a stationary, non-movable camera. It is assumed that the majority content of the frame is a static content 13 that is common for at least a few consecutive frames, while only a fragment (or a plurality of fragments) of the frame comprises a moving object. A moving object occupies a particular fragment on each consecutive frame, and a common fragment 12 on a plurality of consecutive frames.

One of the aims of the method presented herein is to provide an encoded video stream which has high quality perceivable to the user. It is based on an observation that the user is able to recognize more details of the image in the static parts of the image than in the moving parts of the image. Therefore, the static parts of the image in the method presented herein are encoded with a higher resolution than the moving parts of the image.

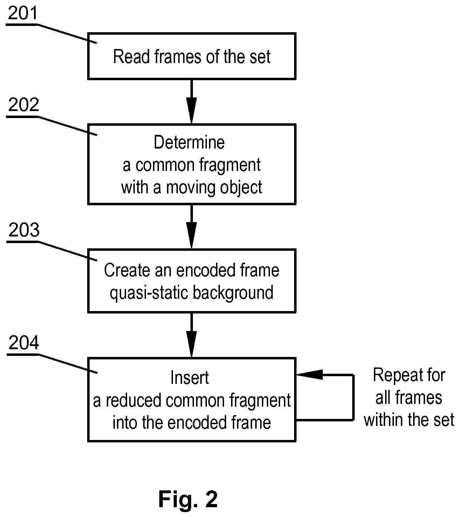

In the method presented herein, a set of a plurality of consecutive frames 10, 20 is encoded as a single encoded complex frame 30. For example, the set may contain 16 consecutive frames. The method determines a common fragment 12 for all frames of the set occupied by the moving object 11. It is assumed that since that fragment contains a moving object, the user will not be able to recognize the details of that object as much as the details of the static parts of the image, therefore it can be encoded with lower resolution. Therefore, that common fragment of each of the frames can be reduced in size, without noticeable quality loss to the user (at least, the quality loss is noticeable to a smaller extent than would be for a static image). For example, in case of 16 frames, the common fragment can be reduced to a size having 4 times smaller horizontal dimension and 4 times smaller vertical dimension. The reduced fragments 31-1, 31-2, 31-3,..., 31-16 of each consecutive frame of the set are then fit into the common fragment 12 in the encoded complex frame. The other contents of the encoded complex frame may comprise the static image of the first frame, or of one of the other frames, or a combined content of a plurality of frames, as described with respect to step 203 of Fig. 2. As a result, the encoded complex frame contains, within the common fragment 12, reduced representation of the common fragment of the consecutive original frames, as shown in Fig. 1C. Consequently, the frame rate of the encoded stream can be reduced by 16 times.

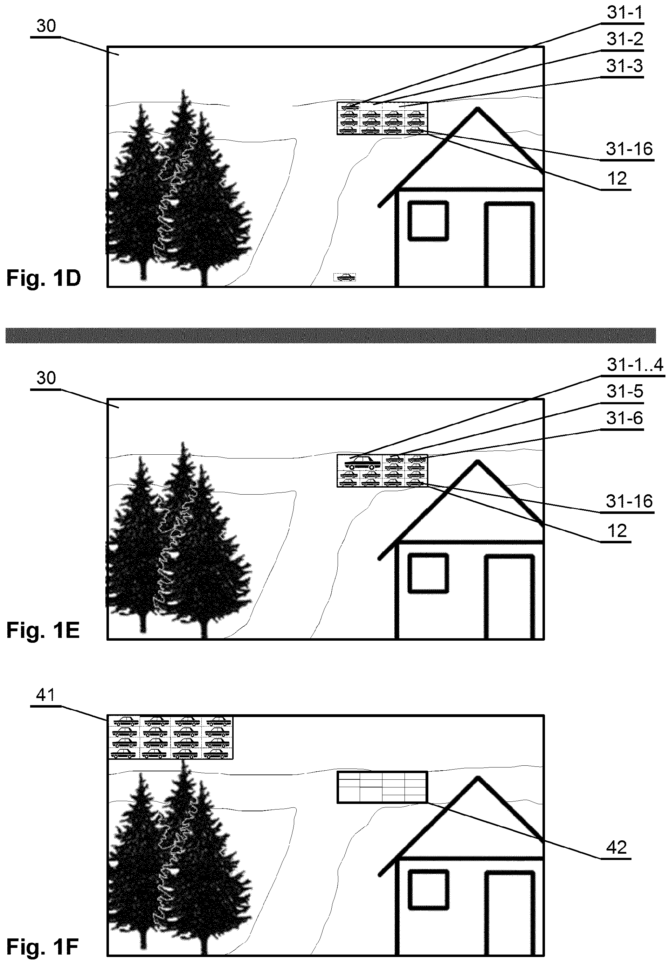

Alternatively, in case the common fragment is substantially the same for some consecutive frames (e.g. the object is moving very slowly or the object has stopped for a while), then instead of having the same common fragment repeated a plurality of times, that fragment can be represented only once and copied to the plurality of frames. For example, let's assume that there is one common fragment that is the same for the four first consecutive frames. In that case, the fragment can be represented only once in the encoded complex frame, as shown in the example of Fig. 1D. Alternatively, the fragment can be represented in an increased resolution, as shown in the example of Fig. 1E (this may require spatial rearrangement of the other fragments).

Alternatively to method of scaling described above, the common area can be also scaled by a method called herein "block scaling". The common area 12 (where movement was detected e.g. in consecutive 16 frames) is divided to rectangular blocks. Each block is scaled separately by a scaling variant optimal to that block. This allows to achieve smaller scaling errors as compared to scaling the common area as a whole. The common area can be relatively big and can be composed of sub-areas having different graphical features. For example, one sub-area can be dominated vertical objects (such as pillars, tree trunks etc.) and another sub-area may contain horizontal objects (such as tree trunks carried on a semi-trailer or a car's grill). Each of these sub-areas should be scaled using a different scaling variant. For example, a optimization algorithm can be used to determine the scaling direction for a particular block depending on the block contents, for example by scaling the block in a horizontal and vertical direction, determining the quality loss for each direction and selecting the direction of scaling for that block that results in a lower quality loss. In case when the whole area would scaled using a single scaling variant, the scaling errors would be higher. The scaled blocks are fit in the block of the same size exactly the same as the scaled areas in the common area as described earlier.

Fig. 1G shows an example of a complex frame which comprises reduced size fragments which are scaled in blocks, including horizontally-scaled blocks (i.e. scaled only in horizontal direction, such as 16x1 scaling factor), vertically-scaled blocks (i.e. scaled only in vertical direction, such as 1x16 scaling factor), uniformly scaled blocks (i.e. scaled with the same factor in the horizontal and vertical direction, such as 4x4 scaling factor) or mixtures thereof (such as 8x2, 2x8 scaling factors). In the example presented in Fig. 1G, two blocks are marked: a mixture-scaled block 31A (with a 8x2 scaling factor) and a uniformly scaled block 31B (with a 4x4 scaling factor), the blocks 31A, 31B shown enlarged in Fig. 1H.

Fig. 11 shows, for clarity, an example of a frame decoded from the frame shown in Fig. 1G, for the first reduced fragment from each block.

Fig. 2 presents in details the consecutive steps of the method of encoding.

First, in step 201, a set of frames is read. The number of the frames in the set (which can be referred to as a reduction ratio) can be predetermined depending on the desired compression ratio. Preferably, the set contains a number of frames equal to a power of 2, for example 2, 4, 8, 16, 32, 64 frames. Alternatively, a different reduction ratio can be selected, such as 9 (for 3x reduction in x and y axis) or 25 (for 5x reduction in x and y axis) etc. The selection of the reduction impacts the number of scaling variants possible, for example three variants are possible for the reduction ratio equal to 9 (1x9, 3x3, 9x1) and five variants are possible for the reduction ratio equal to 16 (1x16, 2x8, 4x4, 8x2, 16x1). The number of variants affects the possibilities of selection of scaling parameters to the content of the scaled fragment - the larger the number of variants, the better possibilities of reduction of scaling errors.

Next, a common fragment with a moving object is determined in step 202. This can be done by any known prior art moving object detection method. For example, the contents of consecutive frames can be compared to determine areas which have changed between the frames. For the sake of clarity, this example will refer to a single object moving within the frame, but the concept can be employed in an equivalent manner to a plurality of objects moving in a plurality of fragments within the frames. The common fragment 12 is the fragment that is occupied by the determined moving object 11 on at least one of the plurality of frames within the set. For slow moving objects, the moving object is typically visible on all of the frames. However, for fast moving objects, such as fast moving cars, birds, etc. it may happen that the object is visible on some of the frames only (and it is not visible on the other frames or is visible therein only partially).

Next, the encoded complex frame is formed in step 203 by first creating the quasi-static background 13 of the frame. For example, the static background may be the contents of the first frame other than the common fragment. Alternatively, the quasi-static background may be created from combined content derived from static part of all 16 input frames. The term "quasi-static" is used because such background propagates slow changes (too slow to be detected as movement). It can be changes in daylight, shadows of moving clouds, diffuse smoke or fog, etc. Pixels can be organized in blocks for example 4x4 wherein, for consecutive positions of the pixels, pixel (1,1) inside block will be taken from frame 1, pixel (1,2) from frame 2, (1,3) from frame 3, (1,4) from frame 4, (2,1) from frame 5, (2,2) from frame 6, (2,3) from frame 7, (2,4) from frame 8, ... and (4,4) from frame 16. A different organization of pixels is also possible, for example a random one (the same random pattern has to be known on encoder and decoder side in such case). Such method of generating static part gives significant advantage. When slow illumination changes are visible in static part of the frame (too slow to be detected by movement detector) then slow changes can be observed on decoder side for such quasi-static part construction and a step change in case of static part taken from frame 1 of set 16. It will be especially visible on the border of a static and moving part of reconstructed frame.

Alternatively, in case of predetermined pattern, a magic square pattern can be used for example such as presented in the table below:

| | | | |
|---|---|---|---|
| 16 | 2 | 3 | 13 |
| 5 | 11 | 10 | 8 |
| 9 | 7 | 6 | 12 |
| 4 | 14 | 15 | 1 |

In such a case, the common frame will include the pixel (4,4) from frame 1, pixel (1, 2) from frame 2, pixel (1,3) from frame 3, pixel (4,1) from frame 4 etc.

Then, in step 204, for each of the frames of the set, the contents of the common fragment are reduced to form a reduced fragment 31-1, 31-2, 31-3,..., 31-16. The reduction is performed by reducing the vertical and/or horizontal resolution of the frame. For example, if the set contains 2 frames, either of the horizontal or the vertical size of the common fragment can be reduced 2 times. If the set contains 3 frames, either of the horizontal or the vertical size of the common fragment can be reduced 3 times. If the set contains 4 frames, the horizontal and vertical size of the common fragment can be reduced 2 times. However, alternatively, if the set contains 4 frames, either of the horizontal or the vertical size of the common fragment can be reduced 4 times. If the set contains 6 frames, the horizontal size of the common fragment can be reduced 3 times and the vertical size of the common fragment can be reduced 2 times, or the horizontal size of the common fragment can be reduced 2 times and the vertical size of the common fragment can be reduced 3 times. The selection of the reduction ratio can be determined by analyzing the nature of the movement. For example, if the object moves quicker in the horizontal direction than in the vertical direction, the image can be reduced to a higher extent in the horizontal direction. The reduced fragments of the consecutive fragments are then input to the area of the common fragment within the encoded complex frame.

Information about the common fragment, such as the area occupied by the common fragment and the areas of the consecutive reduced images occupied within the common fragment (or the compression ratio used) are then stored in the metadata for the encoded complex frame.

The encoded complex frames can be then further encoded using any known encoding methods, such as H264 or H265 or AV1 or VC2.

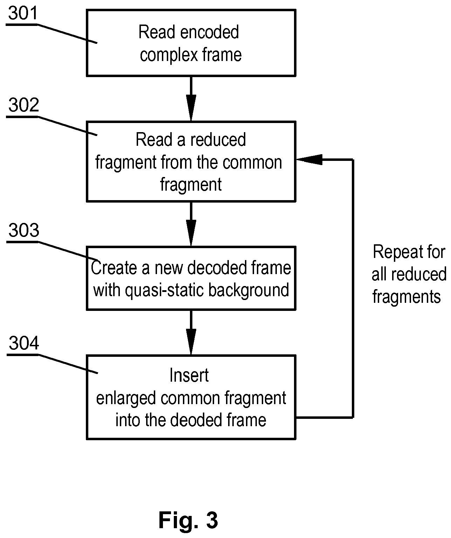

Fig. 3 presents in details the consecutive steps of the method of decoding.

First, in step 301, an encoded complex frame is read, including reading the encoded complex frame metadata that contains information about location of the common fragment and the reduced fragments contained therein.

Next, in step 302, a first reduced fragment 31-1 is read from the common fragment 12 of the encoded complex frame.

In step 303 a new decoded frame is created. The decoded frame has a static background copied from the encoded frame or, in case the encoded frame comprises combined content of the original frames, it may be reconstructed as described below.

In case of the first complex frame (in the stream), the whole complex frame is taken as a static background. In case of all other complex frames, the previously reconstructed static background is taken and only a single pixel is changed in each block (e.g. 4x4 block). If it is the first of the 16 reconstructed frames (within the current complex frame), then pixel (1,1) is taken from each block of the current complex frame and those pixels are placed in the reconstructed static background on their original positions. In the next reconstructed frame (inside the current complex frame), pixels (1,2) are taken and so on. The order of pixels depends on the order in which the pixels in the blocks were encoded. Such construction of the reconstructed static background will properly propagate slow changes (for example illumination or very slow motion of objects in the background) in the static part of the reconstructed frames.

In step 304 the reduced fragment corresponding to that decoded frame is enlarged to fit to the common fragment 12 within the new decoded frame.

The steps 302-304 are repeated for the number of times equal to the reduction ratio for all reduced fragments contained in the encoded complex frame, such that a corresponding set of decoded frames is formed, one for each reduced fragment.

Alternatively, as shown in the example of Fig. 1F, an insertion area 41 can be determined within the decoded frame. Preferably, the insertion area 41 is the area that comprises little details that can be effectively coded, for example by reduction. For example, it can be an area having a uniform color background, such as a fragment of the sky. The insertion area 41 can be overlapping with the common fragment or can be remote with respect to the common fragment, as shown in Fig. 1F. Then, the contents of the common fragments are inserted to the common area in the encoded complex frame by decreasing their size to a size of the common area 42 divided by the compression ratio. The contents of the insertion area 41 are in turn copied to the common fragment area 42.

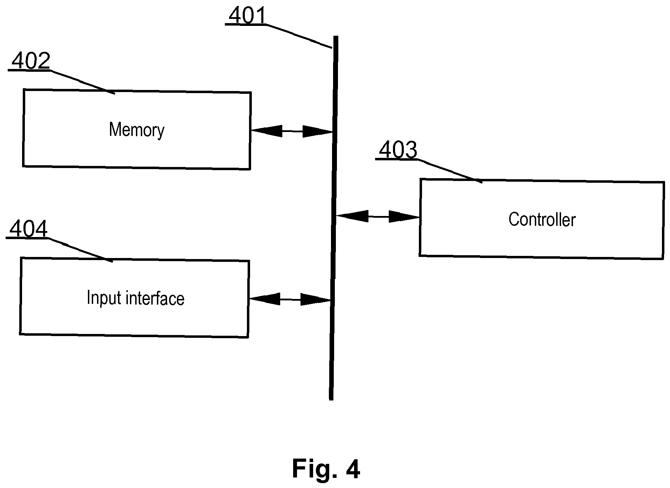

Fig. 4 shows an example of a structure of an encoder or a decoder device. The device may be implemented by using programmable logic circuits such as PGA (Programmable Gate Array), FPGA (Field-Programmable Gate Array) or ASIC (Application-Specific Integrated Circuit) or SoC (System on the Chip). The device comprises a suitable data bus 401 for communicating, preferably bidirectionally, all circuits of the system. Further, the device comprises a memory 402 for storing required software for the controller 403 and any temporary data needed for operation of the system, such as the individual frames and the complex frame. In an encoder device, the controller 403 is configured to execute software that allows for encoding according to the method presented in Fig. 2. In a decoder device, the controller 303 is configured to execute software that allows for decoding according to the method presented in Fig. 3. A user interface 404 allows the user of the device to control the process.

The presented methods and devices can be used in applications such as video surveillance systems, digital television systems, streaming video systems etc.

It can be easily recognized, by one skilled in the art, that the aforementioned method for video encoding may be performed and/or controlled by one or more computer programs. Such computer programs are typically executed by utilizing the computing resources in a computing device such as personal computers, personal digital assistants, cellular telephones, dedicated controllers or the like. Applications are stored on a non-transitory medium. An example of a non-transitory medium is a nonvolatile memory, for example a flash memory or volatile memory, for example RAM. The computer instructions are executed by a suitable processor.

These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A method for encoding a video stream, comprising the steps of:
- receiving (201) a set of video frames, comprising a plurality of consecutive frames (10, 20) of the video stream;
- determining (202) a common fragment (12) of the frames within the set that contains a moving object (11);
- for each of the frames (10, 20) within the set, reading the content of the common fragment (12) and providing (204) a reduced size fragment (31) having a smaller size in at least one dimension; and
- generating an encoded complex frame (30), which comprises the content of the reduced size fragment (31) of the common fragment from at least two successive frames (10, 20) of the set.

2. The method according to claim 1, further comprising determining the content of the common fragment (12) and in case the content is the same for a plurality of frames, including a single instance of the reduced size fragment (31) in the complex frame (30).

3. The method according to any of previous claims, wherein the reduced size fragment for at least one of the frames (31.1-31.4) within the set has a different size than the reduced size fragment for at least one other of the frames (31.5-31.16) within the set.

4. The method according to any of previous claims, wherein the reduced size fragment is divided to blocks, which are scaled horizontally or vertically or uniformly depending on the block contents, in particular with a 16x1, 8x2, 4x4, 2x8 or 16x1 scaling factor.

5. The method according to any of previous claims, wherein the encoded complex frame (30) includes the original-size static background (13) common to the frames of the set.

6. The method according to any of previous claims, wherein the encoded complex frame (30) includes the original-size quasi-static background (13) formed as a combination of backgrounds of the frames of the set.

7. The method according to claim 6, wherein the pixels of the quasi-static background (13) are collected from different positions in the pixels block of consecutive frames of the set, wherein the selection of positions in the pixels block from consecutive frames is according to a predetermined pattern or a random pattern.

8. The method according any of claims 1-7, wherein the reduced-size fragments (31.1-31.16) are positioned in an insertion area corresponding to the position of the common fragment (12) within the complex frame (30).

9. The method according any of claims 1-7, wherein the reduced-size fragments (31.1-31.16) are positioned in an insertion area (41) remote to the common fragment (42) within the complex frame (30).

10. A method for decoding a video stream encoded by the method according to any of previous claims, comprising the steps of:
- reading (301) the complex frame;
- reading (302) consecutive reduced size fragments (31) from the complex frame; and
- for each read reduced size fragment (31), generating (303, 304) a new decoded frame that contains the background (13) reconstructed from the quasi-static background and the reduced size fragment (31) enlarged to the size corresponding to the common fragment (12).

11. A computer program comprising program code means for performing all the steps of the computer-implemented method according to any of claims 1-10 when said program is run on a computer.

12. A computer readable medium storing computer-executable instructions performing all the steps of the computer-implemented method according to any of claims 1-10 when executed on a computer.

13. An encoder device for encoding a video stream, the encoder device comprising a controller (403) configured to encode the video stream by:
- receiving (201) a set of video frames, comprising a plurality of consecutive frames (10, 20) of the video stream;
- determining (202) a common fragment (12) of the frames within the set that contains a moving object (11);
- for each of the frames (10, 20) within the set, reading the content of the common fragment (12) and providing (204) a reduced size fragment (31) having a smaller size in at least one dimension; and
- generating an encoded complex frame (30), which comprises the content of the reduced size fragment (31) of the common fragment from at least two successive frames (10, 20) of the set.

14. A decoder device for decoding a video stream encoded by the method according to any of claims 1-10, the decoder device comprising a controller (403) configured to decode the video stream by:
- reading (301) the complex frame;
- reading (302) consecutive reduced size fragments (31) from the complex frame; and
- for each read reduced size fragment (31), generating (303, 304) a new decoded frame that contains the background (13) reconstructed from the quasi-static background and the reduced size fragment (31) enlarged to the size and position corresponding to the common fragment (12).
